# EUROPÄISCHE PATENTANMELDUNG

(11) **EP 1 972 508 A1**
(43) Veröffentlichungstag der Anmeldung: **24.09.2008**
(21) Anmeldenummer: 08152909.1
(22) Anmeldetag: 18.03.2008
(51) Int. Cl.: B60R 21/13

(54) **Überrollschutzsystem für Kraftfahrzeuge mit einem sensorgesteuert aktiv aufstellbaren Überrollkörper**

(30) Priorität: 23.03.2007 DE 102007013954
(71) Anmelder: Automotive Group ISE Innomotive Systems Europe GmbH, 51702 Bergneustadt (DE)
(72) Erfinder: Nass, Michael, 51702, Bergneustadt (DE)
(74) Vertreter: Fuchs

(57) **Zusammenfassung**

Die Erfindung geht aus von einem bekannten Überrollschutzsystem für Kraftfahrzeuge mit
- einer fahrzeugfesten Halterung (5),
- einem Überrollkörper (1),
- einem Antrieb (9) zum Aufstellen des Überrollkörpers (1) aus einer Ruhelage in eine Schutzposition,
- einer Vorrichtung (12) zur Halterung des Überrollkörpers (1) in der Ruhelage,
- einem sensorgesteuerten Aktuator (12 b) zur Auslösung der Haltevorrichtung (12) und
- einer Sperr-Bolzenanordnung (13) mit zwei federbelasteten Verriegelungsbolzen (13 c), die in Verriegelungslöcher (14) des Überrollkörpers (1) eingreifen, wenn der Überrollkörper (1) in der Schutzposition aufgestellt ist.

Es wird vorgeschlagen, dass die Sperr-Bolzenanordnung (13) ein fahrzeugfest angeordnetes, endseitig offenes Gehäuse (13 a) aufweist, in dem endseitig die Verriegelungsbolzen (13 c) und dazwischen eine einzige Druckfeder (13d) angeordnet sind, mittels derer die Verriegelungsbolzen (13 c) in die Verriegelungslöcher (14) eintreibbar sind.

## Beschreibung

Die Erfindung bezieht sich auf ein Überrollschutzsystem für Kraftfahrzeuge gemäß dem Oberbegriff des Anspruchs 1.

Derartige Überrollschutzsysteme dienen zum Schutz der Insassen in Kraftfahrzeugen ohne schützendes Dach, typischerweise in Cabriolets oder Roadstern, bei einem Überschlag, damit das Fahrzeug über den aufgestellten Überrollkörper abrollt, der den Insassen einen Überlebensraum bietet.

Es ist dabei bekannt, einen die gesamte Fahrzeugbreite überspannenden, als Teil der Karosserie ausgebildeten Überrollbügel vorzusehen. Bei dieser Lösung wird der erhöhte Luftwiderstand und das Auftreten von Fahrgeräuschen als nachteilig empfunden, abgesehen von der Beeinträchtigung des Fahrzeugaussehens.

Es ist auch bekannt, jedem Fahrzeugsitz einen höhenunveränderlich fest im Fahrgastraum installierten, d.h. starren, U-förmigen Überrollbügel zuzuordnen. Diese Lösung wird typischerweise bei Roadstern zur Unterstreichung des sportlichen Aussehens eingesetzt.

Weit verbreitet bei Cabriolets sind konstruktive Lösungen, bei denen der Überrollkörper im Normalzustand eingefahren ist, und im Gefahrenfall, also bei einem drohenden Überschlag, sehr schnell in eine schützende Position aufgestellt wird, um zu verhindern, dass die Fahrzeuginsassen durch das sich überschlagende Fahrzeug erdrückt werden.

Diese so genannten "aktiven" Überrollschutzsysteme weisen typischerweise einen in einem fahrzeugfesten Führungskörper geführten U-förmigen Überrollbügel oder aus einem Profilkörper gebildeten Überrollkörper auf, wobei der Führungskörper in einem Kassetten-Gehäuse, das Seitenteile und ein Bodenteil aufweist, befestigt ist. Dieser Überrollbügel bzw. Überrollkörper wird im Normalzustand gegen die Vorspannkraft mindestens einer Antriebs-Druckfeder durch eine Haltevorrichtung in einer unteren Ruhelage gehalten, und ist im Überschlagfall, sensorgesteuert unter Lösen der Haltevorrichtung, durch die Federkraft der Antriebs-Druckfeder in eine obere, schützende Stellung bringbar, wobei eine dann in verzahnenden Wirkeingriff tretende Verriegelungseinrichtung, die Wiedereinfahrsperre, ein Zurückdrücken des Überrollbügels verhindert. Dabei ist typischerweise jedem Fahrzeugsitz eine Kassette zugeordnet. Eine derartige Kassetten-Konstruktion eines aktiven Überrollschutzsystems mit einem U-förmigen Überrollbügel zeigt beispielsweise die DE 100 40 649 C1.

Neben den Kassetten-Konstruktionen sind auch aktive Überrollschutzsysteme nach einem Konstruktionsprinzip mit einer Rückwand-Baueinheit bekannt, wie es beispielsweise in der DE 103 44 446 B3 beschrieben wird. Dieses Prinzip weist eine zwischen Fond und Gepäckraum angebrachte Rahmenkonstruktion auf, bestehend einmal aus einem sich über die Innenbreite des Fahrzeuges erstreckenden, karosseriefest angebrachten Profil-Querträger, der Führungsmittel für zwei nebeneinander angeordnete U-förmige Überrollbügel aufweist, sowie bestehend zum anderen aus sich vertikal nach unten erstreckenden Profil-Trägerelementen mit einem Bodenteil für die Aufnahme der üblichen Komponenten des ausfahrbaren Überrollschutzsystems, wie z.B. den Auslösemagneten für das sensorgesteuerte Auslösen der Ausfahrbewegung der Überrollbügel sowie die Antriebs-Druckfedern.

Sowohl die Kassetten-Konstruktionen als auch die Querträger-Konstruktionen sind in vielfältigen Ausführungsformen, angepasst an den jeweiligen Fahrzeugtyp, auf dem Markt eingeführt und in Betrieb.

Bei all diesen aktiven Überrollschutzsystemen, bei denen auch die Erfindung Anwendung finden kann, ist es notwendig, eine im Gefahrenfall aktivierbare Verriegelungseinrichtung, die Wiedereinfahrsperre, vorzusehen, die im aufgestellten Zustand des Überrollkörpers verhindert, dass dieser aufgrund der bei einem Überschlag auftretenden Kräfte unter Aufgabe des Überlebensraumes in die Kassette oder in die Rückwand-Baueinheit zurückgedrückt wird. Dieser Verriegelungseinrichtung kommt daher eine wesentliche Sicherheitsfunktion zu.

Es sind zahlreiche Konstruktionen für diese Verriegelungseinrichtung bekannt geworden. Sie beruhen überwiegend auf dem Wirkeingriff zweier zueinander komplementärer Zahnelemente. So zeigt die zitierte DE 100 40 649 C1 eine Verriegelungseinrichtung, bestehend einmal aus einem Rastdorn, welcher auf einer beide Schenkel-Enden des zugehörigen U-förmigen Überrollbügels verbindenden, mit ihm ausfahrenden Traverse befestigt ist, und zum anderen aus einer Sperrklinke, die drehbar in dem die Bügel-Schenkel führenden massiven fahrzeugfesten Führungsblock so angelenkt ist, dass sie in verrastendem Wirkeingriff mit dem Rastdorn bringbar ist. Es sind dabei auch Lösungen bekannt, bei denen die beiden Verriegelungskomponenten umgekehrt angebracht sind, d.h. der Rastdorn am fahrzeugfesten Führungsblock und die Sperrklinke an der mit dem Überrollkörper ausfahrenden Traverse. Auch sind Lösungen mit verzahnten Leisten bekannt.

Bei diesen bekannten Lösungen wird die Verriegelungseinrichtung, abgesehen von dem notwendigen Bauteile- und Montageaufwand weitgehend einseitig, d.h. unsymmetrisch von den Überschlagkräften belastet.

Eine andere Arte der Verriegelung wird bei dem ausfahrbaren Überrollbügel gemäß DE 39 05 470 A1 erreicht, bei dem die Arretierungs- und Blockiereinrichtung funktionell zusammengefasst ist und aus einem mindestens zweiarmigen Hebel für jeden Schenkel des Überrollbügels besteht. Ein Arm des Hebels wird über einen Arm der Auslöseeinrichtung unter Spannung einer Zugfeder in Blockierstellung gehalten und der andere Arm des Hebels wird im Aktivierungsfall durch die Zugfeder in die Verriegelungsstellung gebracht. Diese Verriegelung wirkt zwar symmetrisch auf beide Schenkel des Überrollbügels, ist aber verhältnismäßig aufwändig.

Aus der DE 39 30 171 A1 und der DE 103 53 867 B3 sind ausfahrbare Überrollschutzkörper gemäß Oberbegriff des Anspruchs 1 bekannt, bei denen federbelastete Sperrglieder bzw. Verriegelungsbolzen in Verriegelungslöcher eingreifen, wenn der Überrollschutzkörper in die Schutzposition ausgefahren ist. Es sind zwei oder sogar vier Verriegelungselemente mit jeweils eigener Vorspannfeder vorgesehen. Auch diese bekannten Verriegelungsvorrichtungen werden als zu aufwändig angesehen.

Der enorme Kostendruck in der Automobilindustrie verlangt von den Zulieferfirmen immer stärker kostengünstigere Lösungen. So auch hinsichtlich der Überrollschutzsysteme.

Der Erfindung liegt die Aufgabe zugrunde, ein Überrollschutzsystem mit einer sehr einfachen, kostengünstigen Verriegelungseinrichtung gegen ein Wiedereinfahren des Überrollkörpers nach einer unfallbedingten Aufstellung zu schaffen, welches dennoch eine sehr sichere Verriegelung des Überrollkörpers gewährleistet.

Die Lösung dieser Aufgabe gelingt bei einem Überrollschutzsystem für Kraftfahrzeuge mit
- einer fahrzeugfesten Halterung,
- einem Überrollkörper,
- einem Antrieb zum Aufstellen des Überrollkörpers aus einer Ruhelage in eine Schutzposition,
- einer Vorrichtung zur Halterung des Überrollkörpers in der Ruhelage,
- einem sensorgesteuerten Aktuator zur Auslösung der Haltevorrichtung und
- einer Sperr-Bolzenanordnung mit zwei federbelasteten Verriegelungsbolzen, die in Verriegelungslöcher des Überrollkörpers eingreifen, wenn der Überrollkörper in der Schutzposition aufgestellt ist,
dadurch, dass die Sperr-Bolzenanordnung ein fahrzeugfest angeordnetes, endseitig offenes Gehäuse aufweist, in dem endseitig die Verriegelungsbolzen und dazwischen eine einzige Druckfeder angeordnet sind, mittels derer die Verriegelungsbolzen in die Verriegelungslöcher eintreibbar sind.

Bei der erfindungsgemäßen Verriegelungseinrichtung ist daher nur eine einfache linear wirkende Sperr-Bolzenanordnung für die Verriegelung notwendig, was den Bauteile- und Montageaufwand - und damit auch die Kosten - reduziert. Im Fall eines U-förmigen Überrollbügels kann darüber hinaus auf die Traverse samt Rastdorn verzichtet werden. Auch die fahrzeugfeste Halterung des Überrollkörpers, der so genannte, typischerweise massiv ausgebildete Führungsblock, kann sehr viel einfacher gestaltet werden, da ihm im wesentlichen nur noch die Aufgabe zukommt, den Überrollkörper zu führen. So wäre es bei U-förmigen Überrollbügeln denkbar, den Führungsblock für die Bügelschenkel durch ein einfaches Profilteil, z.B. ein C-Profil, Rohre mit angeschweißten Rohren und Flanschen aufzubauen. Das Auffangen der bei einem Überschlag in der Verriegelungseinrichtung auftretenden Kräfte erfolgt durch eine gezielte Kraftübertragung weitgehend direkt in den Überrollkörper, z.B. in die Bügelschenkel.

Bei einer besonderen Weiterbildung der Erfindung ist die Sperr-Bolzenanordnung, sich über eine vorgegebene Breite erstreckend, am fest stehenden Teil des Überrollschutzsystems angeordnet und weist an beiden Stirnseiten linear austretende Verriegelungsbolzen auf, die im Verriegelungsfall beidseitig sperrend in die Wandung des Überrollkörpers eingreifen; dadurch erfolgt die Verriegelung unmittelbar am Überrollkörper, insbesondere bei einem U-förmigen Überrollbügel an seinen beiden Bügelschenkeln. Wegen der eine vorgegebene Breite des Überrollkörpers überspannenden Länge der Sperr-Bolzenanordnung und des beabstandeten gleichzeitigen Wirkeingriffes der Verriegelungsbolzen (die man auch als Verriegelungszapfen bezeichnen kann) mit dem Überrollkörper, d.h. bei einem U-förmigen Überrollbügel mit seinen Bügelschenkeln oder bei einem Überrollprofilkörper mit entsprechenden Profilabschnitten, wird die Verriegelungseinrichtung von den zentral angreifenden Überschlagskräften relativ gleichmäßig belastet.

Bei einem U-förmigen Überrollbügelsystem mit unterschiedlich langen Schenkelrohren kann diese vorteilhaft so ausgebildet sein, dass als Antrieb zum Aufstellen des Überrollbügels ein Federantrieb mit nur einer Schraubenfeder im längeren Schenkelrohr vorgesehen ist, welche durch einen Federführungs-Dorn geführt ist. Das kürzer ausgebildete Schenkelrohr ermöglicht daher Bauraum für eine Durchlademöglichkeit.

Weitere Ausgestaltungen der Erfindung sind in den Unteransprüchen 2 bis 11 beschrieben und ergeben sich aus der Figurenbeschreibung.

Anhand eines in den Zeichnungen dargestellten vorteilhaften Ausführungsbeispieles der erfindungsgemäßen Verriegelungseinrichtung wird die Erfindung näher erläutert.

Es zeigen:
- Fig. 1: in einer isometrischen Darstellung ein Überrollschutzsystem mit einem in der Ruhelage abgelegten U-förmigen Überrollbügel, welcher mit seinen Bügelschenkeln in einem fahrzeugfesten C-Profil linear aufstellbar geführt aufgenommen ist und mit einer vorteilhaften Ausführungsform der erfindungsgemäßen Verriegelungseinrichtung in Form einer sich zwischen den Bügelschenkeln erstreckenden fahrzeugfest angebrachten Sperr-Bolzenanordnung,
- Fig. 2: im Figurenteil A das eingefahrene Überrollschutzsystem nach Fig. 1 in einer Längsschnitt-Darstellung, in Verbindung mit einer vergrößerten Ausschnitt-Darstellung der Sperr-Bolzenanordnung im Figurenteil B, ebenfalls in der Ruhelage des Überrollbügels, und
- Fig. 3: in zwei Figurenteilen A, B entsprechend Fig. 2 das Überrollschutzsystem im ausgefahrenen Zustand, d.h. mit dem in die stützende Schutzposition aufgestellten Überrollbügel.

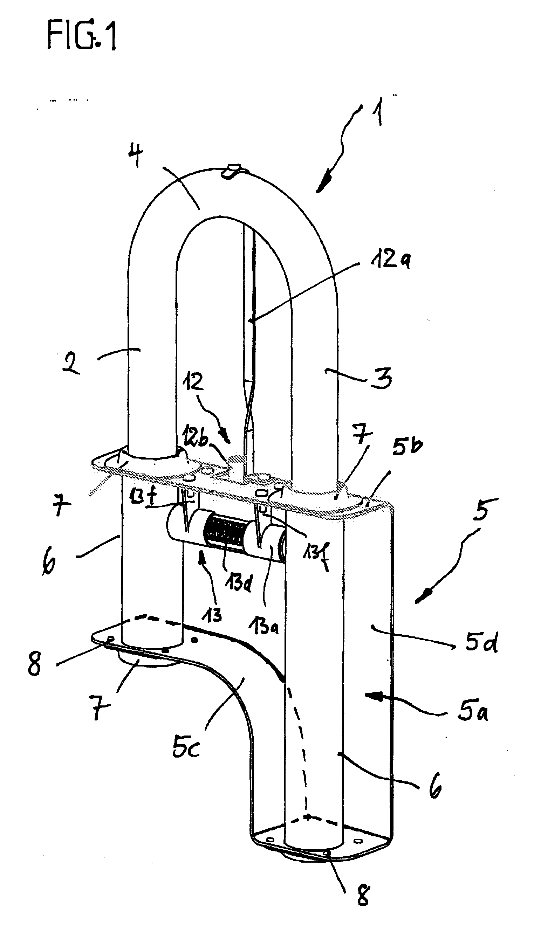

Die Fig. 1 zeigt ein aktives, sitzbezogen ausgestaltetes Überrollschutzsystem für Kraftfahrzeuge, welches als Überrollkörper jeweils einen U-förmigen Überrollbügel 1 aufweist, der zwei rohrförmige Bügelschenkel 2, 3 besitzt, die über einen Bügelkopf 4 miteinander verbunden sind. Die Bügelschenkel 2, 3 sind in einer fahrzeugfesten Halterung 5 geführt aufgenommen. Der Einfachheit halber ist in Fig. 1 nur eines der Überrollschutzsysteme dargestellt. Das zweite System ist im Fahrzeug spiegelbildlich dazu in Querrichtung neben dem dargestellten System angebracht.

Derartige Überrollschutzsysteme sind in manigfaltigen Ausführungsformen bekannt geworden und brauchen daher hier nicht näher erläutert zu werden.

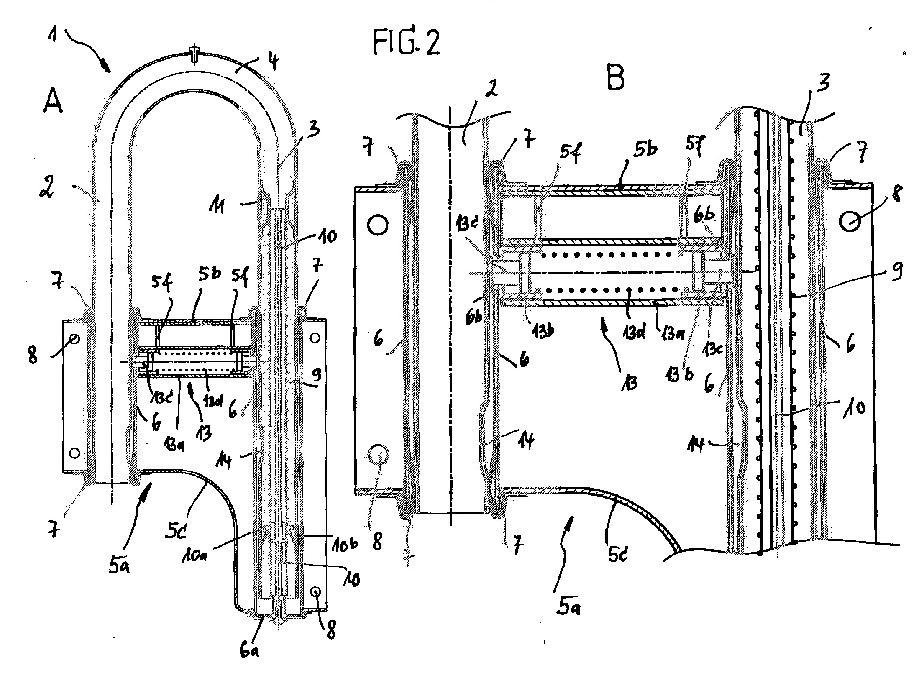

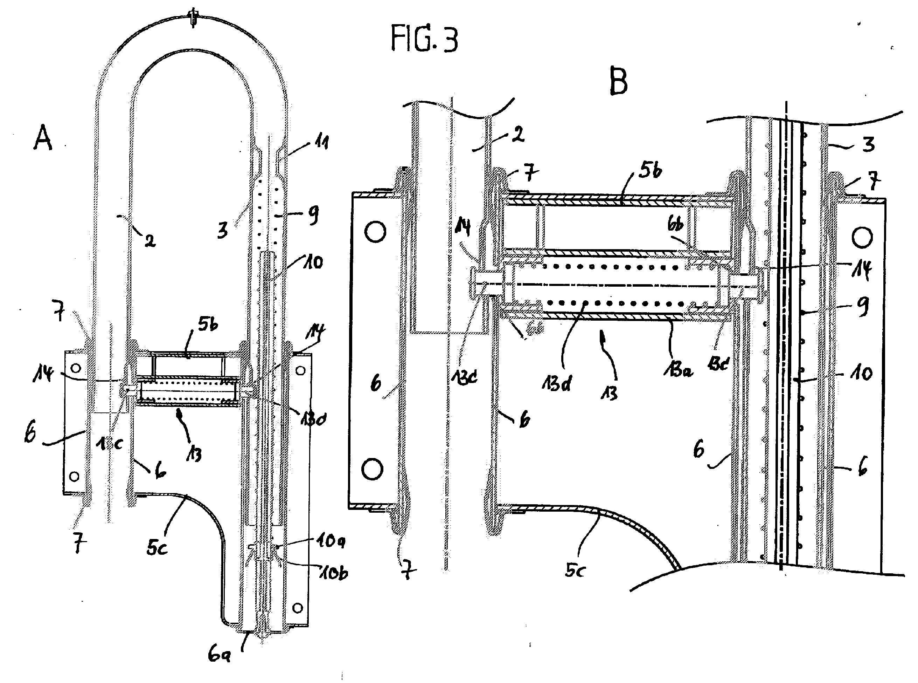

Im dargestellten Beispiel sind die Bügelschenkel 2, 3 unterschiedlich lang ausgebildet, wobei die Überrollschutzsysteme so im Fahrzeug quer zur Fahrtrichtung angebracht sind, dass jeweils der kürzere Bügelschenkel 2 dem Fahrzeuginneren zugewandt ist. Die Halterung 5 besteht aus einem Blechformteil in Gestalt eines C-Profils 5 a, mit einem oberen linearen Schenkel 5 b und einem unteren, geschwungenen Schenkel 5 c. Zwischen diesen beiden Schenkeln sind Führungsrohre 6 angebracht, vorzugsweise angeschweißt, in denen die Bügelschenkel 2, 3 geführt aufgenommen sind, wie insbesondere die Figuren 2 und 3 zeigen. Unterstützt wird die Führung durch Führungseinsätze 7, z.B. Kunststoffbuchsen oder elastisch federnd nachgiebige Blechformteile, die in die Führungsrohre 6 eingesetzt sind.

Über Befestigungsbohrungen 8 kann das C-Profil 5 a mit der Fahrzeugkarosse oder einem damit verbundenen Aufbauteil verbunden werden. So kann es z.B. an einem sich quer über die Wagenbreite erstreckenden Querträger auf Höhe der Rückwand, welche den Fond des Wagens vom Gepäckraum trennt, angebracht werden. Der kürzere Bügelschenkel 2 in Verbindung mit dem geschwungenen Schenkel 5 c des C-Profils gibt dann mit Vorteil insoweit Bauraum für eine Durchlademöglichkeit frei. Die Befestigungsbohrungen 8 befinden sich dann, wie die Figuren 2 und 3 zeigen, an den Verbindungsschenkeln 5 d des C-Profils, 5 a.

Der Überrollbügel 1 wird mit einer Antriebs-Schraubenfeder 9, welche im längeren Bügelschenkel 3 aufgenommen ist, angetrieben. Die Antriebs-Schraubenfeder 9 umhüllt einen Federführungsstab 10, der bodenseitig an einem Deckel 6 a befestigt ist. Dieser Federführungsstab 10 weist in bekannter Weise einen Anschlag 10 a mit Spreizfingern 10 b auf, an welchem sich das untere Ende der Antriebs-Schraubenfeder 9 abstützt. Das obere Ende der Antriebs-Schraubenfeder 9 stützt sich an einer im Innern des Bügelschenkels 3 angebrachten Ringbuchse 11 ab, welche auch im Ruhezustand des Überrollbügels (Fig. 2 A) die Spitze des Federführungsstabes 10 aufnimmt, um diese zu fixieren, damit insoweit im normalen Fahrbetrieb keine Schwirrgeräusche oder dergleichen auftreten.

Um den Überrollbügel 1 im Ruhezustand gegen die Kraft der vorgespannten Antriebs-Schraubenfeder 9 niederzuhalten, ist eine sensorgesteuert auslösbare Haltevorrichtung 12 mit einem Halteglied 12 a, das mit dem Überrollbügel 1 fest und mit einer sensorgesteuert aktivierbaren fahrzeugfesten Aktuator-Anordnung 12 b lösbar verbunden ist, vorgesehen. Diese Aktuator-Anordnung ist in Fig. 1 nur mit ihrem oberen Teil zu sehen.

Derartige Haltevorrichtungen sind in manigfaltigen Ausführungsformen bekannt geworden, sowohl mit pyrotechnischen als auch mit elektromagnetischen Aktuatoren, und brauchen daher hier nicht näher dargestellt und beschrieben werden.

Damit der aufgestellte Überrollbügel 1 (Fig. 3 a) bei einem Überschlag durch die dabei auftretenden Kräfte nicht in die Führungsrohre 6 des C-Profils 5 a zurückgedrückt werden kann, besitzen die aktiv aufstellbaren Schutzsysteme eine Verriegelungseinrichtung, die so genannte Wiedereinfahrsperre. Die Figuren zeigen dabei eine vorteilhafte erfindungsgemäße Ausführungsform einer sehr einfachen, kostengünstigen Verriegelungseinrichtung 13.

Als Verriegelungseinrichtung ist prinzipiell eine fahrzeugfest zwischen den Führungsrohren 6 der Bügelschenkel 2, 3 fahrzeugfest angebrachte Sperr-Bolzenanordnung 13 vorgesehen, welche sich über den Freiraum zwischen den beiden Führungsrohren 6 erstreckt.

Die Sperr-Bolzenanordnung weist ein Gehäuse 13 a auf, welches sich quer zur Fahrtrichtung erstreckt. Es ist über Befestigungs-Stege 13 f fest mit dem insoweit verstärkten oberen Schenkel 5 b des C-Profils 5 a verbunden und in Fig. 1 partiell aufgeschnitten. An beiden offenen Stirnseiten des Gehäuses 13 a ist, wie insbesondere die Figuren 2 und 3 zeigen, jeweils eine Führungsbuchse 13 b fest angebracht, in welcher jeweils ein Verriegelungsbolzen 13 c mit einem bundartigen Ansatz linear verschiebbar aufgenommen ist. Zwischen den inneren Enden der Verriegelungsbolzen 13 c ist im Gehäuse 13 a eine schraubenförmige, im Ruhezustand komprimierte Druckfeder 13 d aufgenommen, welche die Verriegelungsbolzen 13 c im Verriegelungssinne vorspannt.

Jeder der Verriegelungsbolzen 13 c besitzt einen pilzhutförmig ausgebildeten Kopf für einen wirksamen Eingriff in die Verriegelungslöcher 14.

Um einen Eingriff der Verriegelungsbolzen 13 c in die Bügelschenkel 2, 3 zu ermöglichen, weist das Führungsrohr 6 eine Durchtrittsöffnung 6 b für den Durchtritt der Verriegelungsbolzen 13 c auf.

Im Ruhezustand (Fig. 2) liegen die pilzhutförmigen Köpfe der Verriegelungsbolzen 13 c an der geschlossenen Wandung der Bügelschenkel 2, 3 vorgespannt an. Damit der Aufstellvorgang nicht merklich beeinträchtigt wird, müssen die Bügelschenkel 2, 3 relativ reibfrei an den Köpfen der Verriegelungsbolzen vorbeigleiten können. Das Gleitvermögen kann materialmäßig an den Köpfen und/oder den Gleitbahnabschnitten der Bügelschenkel sowie durch die Abstimmung der Federkraft der Druckfeder 13 d erreicht werden.

Um einen Eingriff der Verriegelungsbolzen 13 c in die Bügelschenkel 2, 3 in der aufgestellten Stützposition des Überrollbügels 1 (Fig. 3) zu ermöglichen, sind in der Wandung der Schenkelrohre 2, 3 innen liegende Verriegelungslöcher 14 vorgesehen.

Damit diese Verriegelung trotz der großen Ausfahrgeschwindigkeit des Überrollkörpers sicher verriegeln kann, sind besondere Maßnahmen bezüglich der Verriegelungslöcher 14 getroffen.

Die Verriegelungslöcher 14 sind als Langlöcher in Richtung der Längsachse der Bügelschenkel 2, 3 ausgebildet und die Wandungsbereiche, in denen sich die Verriegelungslöcher 14 befinden, sind partiell verprägt, derart, dass sich für die Verriegelungsbolzen 13 c eine Einlaufschräge ergibt.

Die pilzhutförmige Ausgestaltung der Köpfe der Verriegelungsbolzen soll einerseits das Eintauchen in die Verriegelungslöcher 14 erleichtern und andererseits durch den Kragen ein ungewolltes Rückziehen der Verriegelungsbolzen 13 c verhindern.

Durch den formschlüssigen Wirkeingriff der Verriegelungsbolzen 13 c mit den Verriegelungslöchern 14 wird eine stabile und sichere Sperre gegen ein Zurückdrücken des Überrollbügels 1 erreicht.

In dem dargestellten Ausführungsbeispiel mit einem ausfahrbaren U-förmigen Überrollbügel ist die Sperr-Bolzenanordnung fahrzeugfest angebracht und die korrespondierenden Verriegelungs-Öffnungen sind in den Schenkelrohren des Bügels ausgebildet. Ist der Überrollkörper als Profilkörper ausgebildet, kann dieser zwei beabstandete, sich vertikal längs erstreckende Anschläge aufweisen, zwischen denen die Sperr-Bolzenanordnung fahrzeugfest angebracht ist. Die Anordnung ist dabei so getroffen, dass in den beiden am Profilkörper beabstandet angebrachten Anschlägen jeweils mindestens ein Verriegelungsloch für einen verriegelnden Wirkeingriff mit dem zugehörigen Verriegelungsbolzen in der aufgestellten Position des Profilkörpers angebracht ist. In den anderen Positionen halten die Anschläge, die quasi wie seitliche Führungen fungieren, die Verriegelungsbolzen von einem Wirkeingriff gegen die Federkraft der Sperrfeder zurück.

Es ist auch denkbar, die Sperr-Bolzenanordnung nicht fahrzeugfest, sondern am Überrollkörper selbst anzubringen und die Verriegelungslöcher an der fahrzeugfesten Halterung auszubilden. Diese Variante bietet sich insbesondere bei einem Kassettensystem mit einem inneren Profilkörper, als Überrollkörper, der in einem fahrzeugfesten äußeren Profilkörper geführt ist, an, weil in diesen Fällen typischerweise nur ein sehr geringer Bauraum zur Verfügung steht. Die Sperr-Bolzenanordnung kann jedoch ohne weiteres im Innern des Überrollkörpers angebracht werden, der seitliche Durchtrittsöffnungen für die Verriegelungsbolzen aufweist, wobei in den Seitenteilen des äußeren Profilkörpers die entsprechende Zahl der Verriegelungslöcher ausgebildet ist. In der ausgefahrenen Stützstellung des Überrollkörpers, des Innenprofils, treten dann die mit ausgefahrenem Verriegelungsbolzen in Wirkeingriff mit dem zugehörigen Verriegelungsloch.

### Bezugszeichenliste

- 1: Überrollbügel
- 2, 3: Bügelschenkel (Schenkelrohre)
- 4: Bügelkopf
- 5: fahrzeugfeste Halterung
- 5 a: C-Profil
- 5 b: linearer Schenkel
- 5 c: geschwungener Schenkel
- 5 d: Verbindungsschenkel
- 6: Führungsrohre
- 6 a: Deckel
- 6 b: Durchtrittsöffnungen
- 7: Führungseinsätze
- 8: Befestigungsbohrungen
- 9: Antriebs-Schraubenfeder
- 10: Federführungsstab
- 10 a: Anschlag
- 10 b: Spreizfedern
- 11: Ringbuchse
- 12: Haltevorrichtung
- 12 a: Halteglied
- 12 b: Aktuator-Anordnung
- 13: Sperr-Bolzenanordnung
- 13 a: Gehäuse
- 13 b: Führungsbuchse
- 13 c: Verriegelungsbolzen
- 13 d: Druckfeder (Sperrfeder)
- 13 f: Befestigungs-Stege
- 14: Verriegelungslöcher

## Patentansprüche

1. Überrollschutzsystem für Kraftfahrzeuge mit
- einer fahrzeugfesten Halterung (5),
- einem Überrollkörper (1),
- einem Antrieb (9) zum Aufstellen des Überrollkörpers (1) aus einer Ruhelage in eine Schutzposition,
- einer Vorrichtung (12) zur Halterung des Überrollkörpers (1) in der Ruhelage,
- einem sensorgesteuerten Aktuator (12 b) zur Auslösung der Haltevorrichtung (12) und
- einer Sperr-Bolzenanordnung (13) mit zwei federbelasteten Verriegelungsbolzen (13 c), die in Verriegelungslöcher (14) des Überrollkörpers (1) eingreifen, wenn der Überrollkörper (1) in der Schutzposition aufgestellt ist,
**dadurch gekennzeichnet, dass** die Sperr-Bolzenanordnung (13) ein fahrzeugfest angeordnetes, endseitig offenes Gehäuse (13 a) aufweist, in dem endseitig die Verriegelungsbolzen (13 c) und dazwischen eine einzige Druckfeder (13 d) angeordnet sind, mittels derer die Verriegelungsbolzen (13 c) in die Verriegelungslöcher (14) eintreibbar sind.

2. Überrollschutzsystem nach Anspruch 1, **dadurch gekennzeichnet, dass** der Überrollkörper ein U-förmiger Überrollbügel (1) ist, bei dem zwei parallele Bügelschenkel (2, 3) über einen Bügelkopf (4) miteinander verbunden sind und dass die Sperr-Bolzenanordnung (13) sich zwischen den beiden Bügelschenkeln (2, 3) erstreckend angeordnet ist.

3. Überrollschutzsystem nach Anspruch 2, **dadurch gekennzeichnet, dass** die fahrzeugfeste Halterung (5) durch ein karosseriefest angebrachtes C-Profilteil (5 a) gebildet ist, welches zur Führung der Bügelschenkel (2, 3) zwischen den abgewinkelten Schenkeln (5 b, 5 c) jeweils mit einem Führungsrohr (6) versehen ist.

4. Überrollschutzsystem nach Anspruch 3, **dadurch gekennzeichnet, dass** in den Führungsrohren (6) Führungseinsätze (7) angeordnet sind.

5. Überrollschutzsystem nach Anspruch 1, **dadurch gekennzeichnet, dass** der Überrollkörper (1) als Profilkörper ausgebildet ist und dass die Sperr-Bolzenanordnung (13) zwischen zwei am Profilkörper sich beabstandet längs erstreckend ausgebildeten Anschlägen angeordnet ist.

6. Überrollschutzsystem nach einem der Ansprüche 1 bis 5, **dadurch gekennzeichnet, dass** in dem Gehäuse (13 a) endseitig je eine Führungsbuchse (13 b) angeordnet ist und dass die Verriegelungsbolzen (13 c) über einen bundartigen Ansatz in den Führungsbuchsen (13 b) linear verschieblich aufgenommen sind.

7. Überrollschutzsystem nach Anspruch 6, **dadurch gekennzeichnet, dass** die Köpfe der Verriegelungsbolzen (13 c) pilzhutförmig ausgebildet sind.

8. Überrollschutzsystem nach einem der Ansprüche 1 bis 7, **dadurch gekennzeichnet, dass** in den Bügelschenkeln (2, 3) des Überrollbügels (1) bzw. in den sich längs erstreckenden Anschlägen des Profilkörpers jeweils ein Verriegelungsloch (14) für den Eingriff eines Verriegelungsbolzens (13 c) ausgebildet ist.

9. Überrollschutzsystem nach Anspruch 8, **dadurch gekennzeichnet, dass** das Verriegelungsloch (14) langlochartig ausgebildet ist.

10. Überrollschutzsystem nach Anspruch 9, **dadurch gekennzeichnet, dass** der Rand des Verriegelungsloches (14) eine Einlaufschräge aufweist.

11. Überrollschutzsystem nach Anspruch 1, jedoch mit der Maßgabe, dass die Sperr-Bolzenanordnung (13) am Überrollkörper (1) angebracht ist und dass die Verriegelungslöcher (14) in der fahrzeugfesten Halterung ausgebildet sind.
